Europäisches Patentamt

European Patent Office

Office européen des brevets

(19)

(11) **EP 0 774 110 B1**

(12) **FASCICULE DE BREVET EUROPEEN**

(45) Date de publication et mention
de la délivrance du brevet:
**10.11.1999  Bulletin 1999/45**

(21) Numéro de dépôt: **95927011.7**

(22) Date de dépôt: **02.08.1995**

(51) Int Cl.⁶: **G01M 15/00**

(86) Numéro de dépôt international:
**PCT/FR95/01041**

(87) Numéro de publication internationale:
**WO 96/04539 (15.02.1996 Gazette 1996/08)**

(54) **PROCEDE ET DISPOSITIF DE DETECTION DES RATES DE COMBUSTION D'UN MOTEUR A COMBUSTION INTERNE ET ALLUMAGE COMMANDE**

**VERFAHREN UND VORRICHTUNG ZUM ERKENNEN VON VERBRENNUNGSAUSSETZERN EINER BRENNKRAFTMASCHINE MIT FUNKENZÜNDUNG**

**PROCESS AND METHOD FOR THE DETECTION OF MISFIRE IN AN INTERNAL COMBUSTION ENGINE**

(84) Etats contractants désignés:
**DE ES FR GB IT**

(30) Priorité: **03.08.1994  FR 9409645**

(43) Date de publication de la demande:
**21.05.1997  Bulletin 1997/21**

(73) Titulaire: **MAGNETI MARELLI FRANCE**
**92002 Nanterre Cédex (FR)**

(72) Inventeurs:
• **WALLERAND, Philippe**
  **F-78500 Sartrouville (FR)**

• **GENIN, Christophe**
  **F-77186 Noisiel (FR)**

(74) Mandataire: **Bérogin, Francis**
**Cabinet Plasseraud**
**84, rue d'Amsterdam**
**75440 Paris Cedex 09 (FR)**

(56) Documents cités:
**WO-A-94/16209**

## Description

L'invention concerne un procédé et un dispositif de détection des ratés de combustion d'un moteur à combustion interne du type dit à allumage commandé, ou encore à allumage par étincelles, pour véhicule automobile, et en particulier pour un véhicule dont le moteur est, d'une part, associé à un pot d'échappement catalytique, appelé catalyseur dans la suite de la description, et, d'autre part, équipé d'une installation d'alimentation en carburant par injection, de préférence du type dit "multipoint", et tel que l'injection et de préférence également l'allumage du moteur sont commandés par un système électronique de commande et de contrôle, appelé contrôle moteur.

La détection des ratés de combustion dans tous les moteurs à explosion est devenue un problème majeur, en raison des réglementations les plus récentes ou à venir en matière de protection de l'environnement, et que doivent respecter ces moteurs, associés à des catalyseurs.

On sait, en effet, que la survenance de ratés de combustion peut entraîner une détérioration du catalyseur, voire une destruction de ce dernier en cas de ratés successifs, du fait de l'arrivée dans le catalyseur de quantités, pouvant être trop importantes, de mélanges carburants non brûlés résultant de ces ratés de combustion. Cette détérioration ou destruction du catalyseur conduit à des émanations non contrôlées de polluants dans les gaz d'échappement, donc à une mise hors réglementation du véhicule.

Le problème général à la base de l'invention est de proposer un procédé et un dispositif de détection des ratés de combustion, permettant d'alerter le conducteur en cas de risque de dégradation du catalyseur par raté de combustion et/ou d'augmentation excessive des émissions polluantes.

Par WO-A-94 16209, on connaît déjà un procédé de détection des ratés de combustion d'un moteur à combustion interne et allumage commandé comprenant les étapes consistant à :

a) élaborer, pour chaque phase de combustion-détente dans chaque cylindre du moteur, un signal représentatif de la valeur du couple gaz Cg produit dans le cylindre correspondant par la combustion correspondante,

b) mesurer la vitesse de rotation N du moteur et élaborer un signal représentatif de cette vitesse pendant au moins la phase d'admission ayant précédé la phase de combustion-détente du cylindre correspondant,

c) mesurer un paramètre représentatif du remplissage unitaire du cylindre correspondant et élaborer un signal représentatif de ce remplissage unitaire pendant au moins la phase d'admission ayant précédé la phase de combustion-détente au cours du même cycle moteur du cylindre correspondant,

d) entrer les signaux représentatifs de vitesse N et de remplissage unitaire en adresses dans une cartographie de couple gaz théorique de référence, et en déduire un signal représentatif d'un couple de référence Cref.

Ce procédé connu consiste de plus à :

e) affecter le couple de référence Cref d'un coefficient de pondération multiplicatif K associé au cylindre correspondant et/ou au mode de fonctionnement stabilisé ou transitoire du moteur, et en déduire un signal représentatif d'un couple théorique prévue Cpr, et

f) comparer les signaux du couple gaz mesuré Cg et du couple théorique prévu Cpr et considérer qu'il y a un raté de combustion lorsque le rapport du couple gaz Cg au couple théorique prévu Cpr devient inférieur à un seuil de rapport déterminé.

Le but de l'invention est d'améliorer la détection et la capacité de discrimination des ratés de combustion du procédé connu précité, en particulier pour tenir compte du mode de fonctionnement transitoire ou stabilisé du moteur. A cet effet, le procédé selon l'invention, comprenant les étapes a) à d) du procédé connu présenté ci-dessus, se caractérise en ce qu'il comprend de plus les étapes consistant à :

e) affecter l'un au moins des signaux représentatifs de la valeur du couple gaz Cg et du couple de référence Cref d'une correction multiplicative KM respective associée au cylindre correspondant pour obtenir des signaux proportionnels à la valeur du couple gaz Cg et au couple de référence Cref, et affecter de plus l'un au moins des signaux proportionnels d'une correction additive KA en mode de fonctionnement transitoire du moteur, et en déduire un signal représentatif d'un couple théorique prévu Cpr à partir du signal proportionnel au couple de référence Cref, et un signal représentatif d'un couple gaz calculé Cgc à partir du signal proportionnel à la valeur du couple gaz Cg,

f) calculer le rapport du signal représentatif du couple théorique prévu Cpr sur le signal représentatif du couple gaz calculé Cgc, et considérer qu'il y a un raté de combustion lorsque ce rapport est supérieur à un seuil de rapport déterminé.

Ce seuil de rapport peut être constant, par exemple égal à 2, mais, avantageusement, il est tiré d'une cartographie établie en fonction de la vitesse de rotation N du moteur et d'un paramètre représentatif du remplissage unitaire des cylindres du moteur.

Ce paramètre représentatif du remplissage unitaire des cylindres peut être le débit d'air admis par le moteur ou l'angle d'ouverture d'un obturateur rotatif ou papillon régulant l'alimentation en air du moteur, mais, avantageusement, ce paramètre est la pression Pca au collecteur d'admission d'air pour le cylindre correspondant.

Bien que le signal représentatif de la valeur du couple gaz Cg puisse être le seul qui soit affecté de la correction multiplicative KM et, en transitoire, de la correction additive KA, auquel cas le couple théorique prévu Cpr est égal au couple de référence Cref et on calcule Cref/Cgc pour le comparer au seuil précité, avantageusement le signal représentatif du couple de référence Cref est le seul des signaux représentatifs à être affecté de la correction multiplicative, et, en mode de fonctionnement transitoire du moteur, le signal proportionnel correspondant est également le seul à être affecté de la correction additive. Dans ce cas, Cg = Cgc, et on compare Cpr/Cg au seuil précité.

On comprend que l'idée à la base de l'invention consiste à prévoir ou estimer, pour chaque phase de combustion-détente, un couple gaz théorique prévu, en fonction de la vitesse de rotation du moteur ou régime, du paramètre choisi, représentatif du remplissage unitaire des cylindres, et de corrections, dont une première, multiplicative prend en compte l'état de chacun des cylindres du moteur pour les phases de combustion-détente correspondantes, tandis que la seconde, additive, est prise en compte lors d'un mode de fonctionnement transitoire du moteur, et que l'on compare ensuite avantageusement ce couple prévu au couple gaz calculé pour la phase de combustion-détente considérée, pour déduire de la valeur de leur rapport s'il y a eu ou non un raté de combustion pendant cette phase, en fonction du résultat de la comparaison de ce rapport à un seuil.

Avantageusement en outre, le signal représentatif du couple gaz calculé Cgc pour chaque phase de combustion-détente dans chaque cylindre du moteur est élaboré à partir du signal de position angulaire du vilebrequin ou de l'arbre du moteur. Cette caractéristique est avantageuse en ce qu'elle permet de calculer le couple gaz à partir de ce seul signal de position angulaire, sans qu'il soit nécessaire de prévoir d'autres moyens tels que des capteurs de pression effectuant les relevés de pression dans les chambres de combustion.

Cependant, lorsque le signal de position angulaire de l'arbre du moteur est obtenu à l'aide d'un capteur connu, comprenant une cible solidaire en rotation du vilebrequin ou du volant moteur, l'élaboration du signal représentatif du couple gaz calculé Cgc est perturbée par les tolérances d'usinage et de centrage de la cible rotative, et plus généralement de l'ensemble tournant comprenant la cible et le moteur auquel la cible est liée en rotation, et pour compenser au moins en partie les fluctuations de vitesse résultant de ces tolérances, le procédé consiste avantageusement de plus à calculer le couple gaz (Cg) pour chacun des secteurs angulaires de rotation du moteur correspondant respectivement à une phase à combustion-détente de chaque cylindre du moteur, et sur au moins un cycle moteur, en coupure d'injection à au moins un régime moteur donné supérieur à un régime voisin du ralenti, à calculer la moyenne des couples gaz (Cg) pour tous les secteurs angulaires, à définir pour chaque secteur un terme de compensation égal au produit de la différence entre la moyenne des couples et le couple gaz pour ce secteur par un coefficient de proportionnalité, égal à 1 ou fonction de la charge et/ou du régime (N) du moteur, et à ajouter pour chaque secteur le terme de compensation correspondant au couple gaz (Cg) obtenu en phase d'injection pour ce secteur sur au moins une plage de régime, contenant les régimes pour lesquels la coupure d'injection a été appliquée.

Dans le cas d'un moteur à quatre cylindres et quatre temps, et de manière simple, il consiste à calculer le couple gaz (Cg) pour chacun d'au moins deux demi-tours moteur successifs, en coupure d'injection, à calculer la moitié de la variation de couple qui en résulte d'un demi-tour moteur à l'autre, à définir le terme de compensation comme étant égal au produit de la moitié de la variation de couple par le coefficient de proportionnalité, et à ajouter le terme de compensation aux valeurs du couple gaz (Cg) obtenues en phase d'injection pour les demi-tours moteur procurant la valeur du couple gaz la plus faible en phase de coupure d'injection ou respectivement à retrancher le terme de compensation des valeurs du couple gaz (Cg) obtenues en phase d'injection pour les demi-tours moteur procurant la valeur du couple gaz (Cg) la plus forte en phase de coupure d'injection, sur ladite plage de régime.

Avantageusement de plus, les signaux de couple de référence Cref sont aisément déduits d'une cartographie de couple globale pour l'ensemble des cylindres du moteur et valable pour une famille de moteurs, cette cartographie étant préétablie en régime stabilisé du moteur et mémorisée sous la forme d'une table cartographique à deux entrées exprimant des valeurs du couple gaz théorique de référence pour différentes valeurs d'entrée, d'une part, de la vitesse du moteur N, et, d'autre part, de la pression au collecteur d'admission Pca, lesquelles valeurs sont choisies pour optimiser le calcul du couple de référence Cref par interpolation linéaire. Les valeurs ou points de cartographie sont en effet choisis rapprochés dans les zones à fortes courbures de la cartographie pour permettre une interprétation linéaire avec des erreurs minimales.

Pour compenser les dispersions entre cylindres, entre moteurs ainsi que le vieillissement du moteur, la correction multiplicative de KM est recalculée pour chaque phase de combustion-détente du moteur. Elle permet de calculer une valeur Cpr.lent qui est la valeur prise par le couple théorique prévu Cpr en fonctionnement stabilisé du moteur. Pour compenser les fonctionnements transitoires, la correction additive KA est recalculée pour chaque phase de combustion-détente. Elle est ajoutée à Cpr.lent pour donner une valeur Cpr.rapide, qui est la valeur prise par le couple théorique prévu Cpr en fonctionnement transitoire du moteur. Le mode stabilisé ou transitoire de fonctionnement du moteur est déterminé en fonction de la différence, de préférence en valeur absolue, entre deux valeurs du couple de référence Cref calculées l'une pour la phase de combustion-détente considérée, et l'autre pour l'avant-dernière phase de combustion-détente précédente. On considère que le mode est transitoire si cette différence est supérieure à un seuil et stabilisé si cette différence est inférieure audit seuil depuis un nombre déterminé de cycles moteur consécutifs.

De manière simple, la correction multiplicative est calculée comme étant égale à la moyenne d'un nombre déterminé des derniers rapports consécutifs Cg/Cref pour le cylindre correspondant à la phase de combustion-détente considérée. Par contre, la correction additive, utilisée en transitoire, est égale au filtrage de premier ordre de la différence entre les signaux représentatifs du couple gaz calculé Cgc et du couple théorique prévu Cpr en régime stabilisé, indépendamment des cylindres.

Ce mode d'actualisation et d'individualisation des corrections implique une étape consistant à stocker en mémoire un nombre déterminé des dernières valeurs successives du rapport Cg/Cref et de la dernière valeur de la correction additive nécessaires au calcul des corrections. Mais en outre, pour ne pas introduire de valeur aberrante du couple gaz Cg, correspondant à des conditions exceptionnelles, dans le calcul des corrections, et donc afin de ne pas fausser ce calcul, on stocke avantageusement la valeur calculée correspondante du couple prévu Cpr à la place d'une valeur du couple gaz Cg si, pour cette valeur de Cg, on détecte un raté de combustion.

Afin d'alerter le conducteur du véhicule, dont le moteur est associé à un catalyseur, le procédé consiste de plus :

à mesurer le nombre de ratés de combustion ou leur taux détectés pendant des fenêtres de respectivement N1 et N2 tours moteur, par exemple 200 et 1000 tours,
à comparer chacune de ces mesures à au moins un seuil, propre à chaque fenêtre, et
à donner un signal d'alarme correspondant à un état critique du catalyseur en cas de dépassement du seuil propre à la fenêtre de N1 tours, et/ou un signal d'alarme correspondant à un dépassement d'un seuil d'émission de composants nocifs dans les gaz d'échappement en cas de dépassement du seuil propre à la fenêtre de N2 tours.

La détection de ratés de combustion n'étant pas fiable dans tout le domaine d'utilisation du moteur, en particulier lors de forts transitoires (par exemple manoeuvres du levier de vitesses), ou lorsque le moteur est fortement entraîné, il est avantageux que le procédé puisse permettre de désactiver la détection des ratés en phase de coupure d'injection et/ou en phase moteur entraîné. Selon l'invention, cette dernière phase est détectée avantageusement lorsque la pression au collecteur d'admission Pca devient inférieure à un seuil de pression fonction de la vitesse de rotation N du moteur et/ou lorsque le couple prévu Cpr est inférieur à un couple limite, qui peut par exemple correspondre au couple gaz calculé à couple utile nul pour une vitesse identique de rotation N du moteur.

Afin de faciliter la détection de l'état entraînant ou entraîné du moteur, le procédé comprend avantageusement l'étape supplémentaire consistant à entrer le signal de vitesse N en adresse dans une table à une entrée, exprimant les valeurs du couple limite pour différentes valeurs de la vitesse N du moteur, et à en déduire par interpolation, de préférence linéaire, un signal représentatif du couple limite Clim que l'on compare au couple théorique prévu Cpr pour en déduire que le moteur est entraînant ou entraîné selon que Cpr est supérieur ou inférieur à Clim.

Pour les cas où le moteur est fortement entraîné, le procédé permet avantageusement de désactiver la détection des ratés si le couple prévu Cpr est inférieur au produit du couple limite Clim par un facteur inférieur ou égal à 1, et par exemple constant.

De même, dans les cas de forts transitoires (passages de vitesses par exemple), le procédé permet de désactiver la détection des ratés si la valeur absolue de la différence entre les couples de référence Cref pour les phases de combustion-détente d'ordre n (dernière considérée) et d'ordre n-2 est supérieure à un seuil pouvant par exemple être égal au seuil de détermination des modes stabilisé ou transitoire.

Le procédé permet également de désactiver la détection des ratés en cas de dérive exagérée des signaux représentatifs du couple gaz calculé Cgc et du couple théorique prévu Cpr l'un par rapport à l'autre. A cet effet, on considère qu'il y a une dérive exagérée lorsque la valeur moyenne du rapport (Cgc - Cpr)/Cgc calculée pour un nombre donné des dernières phases de combustion-détente, excède un seuil de calibration, et on réactive la détection des ratés dès que cette valeur moyenne redevient inférieure au seuil de calibration, lequel peut être constant, par exemple 0,4 ou 40 % ou fixé à un pourcentage du seuil de détection de raté, auquel est comparé le rapport Cpr/Cgc, en particulier lorsque ce seuil de détection de raté est tiré d'une cartographie, comme mentionné ci-dessus.

Enfin, lorsque le procédé de l'invention comprend une étape d'apprentissage permettant de compenser les écarts de Cgc imputables aux tolérances de fabrication et de centrage de la cible du détecteur de position du vilebrequin, comme mentionné ci-dessus, le procédé comprend également une étape consistant à désactiver la détection des ratés aussi longtemps qu'il n'y a pas eu définition d'au moins un facteur de compensation des variations de couple en coupure d'injection, donc tant qu'il n'y a pas eu passage en coupure d'injection dans une ou plusieures plages de régime prévue(s) pour l'apprentissage de compensation sensible aux dissymétries de la cible.

L'invention a également pour objet un dispositif de détection des ratés de combustion, destiné à la mise en oeuvre du procédé propre à l'invention, pour des moteurs à deux ou quatre temps et à au moins un cylindre, et tel que présenté ci-dessus, et qui se caractérise en ce qu'il comprend :

au moins un capteur de vitesse de rotation du moteur, délivrant un signal de vitesse N,
au moins un capteur d'un paramètre représentatif du remplissage unitaire des cylindres du moteur, tel qu'un capteur de pression au collecteur d'admission d'air, un débitmètre d'air d'admission ou un capteur d'angle du papillon, délivrant un signal représentatif de ce paramètre,
des moyens de calcul du couple gaz Cg, à partir du signal de vitesse moteur N,
des moyens de mémoire, pour stocker des cartographies et des seuils, des moyens de calculs et des moyens de comparaison permettant de calculer et/ou stocker des valeurs du couple de référence Cref, du couple prévu Cpr, du couple gaz calculé Cgc, des corrections multiplicative (KM) et additive (KA), du rapport Cpr/Cgc, et de les comparer à des seuils pour déterminer la présence de ratés de combustion.

L'invention sera mieux comprise, et d'autres avantages et caractéristiques de l'invention ressortiront à la lecture de la description donnée ci-dessous, à titre non limitatif, d'un exemple de réalisation décrit en référence aux dessins annexés sur lesquels :

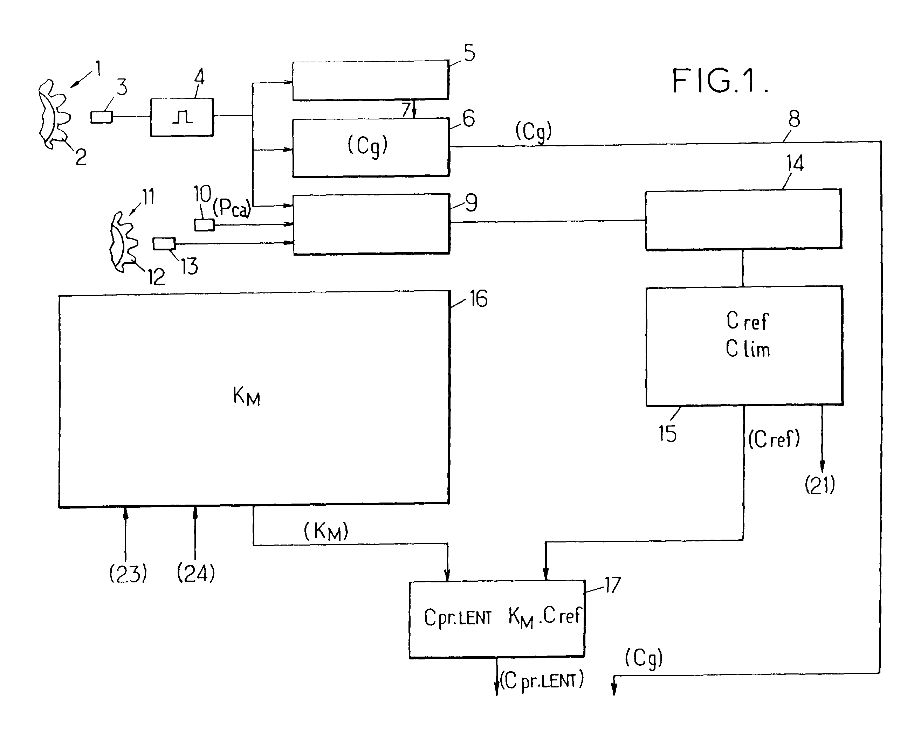

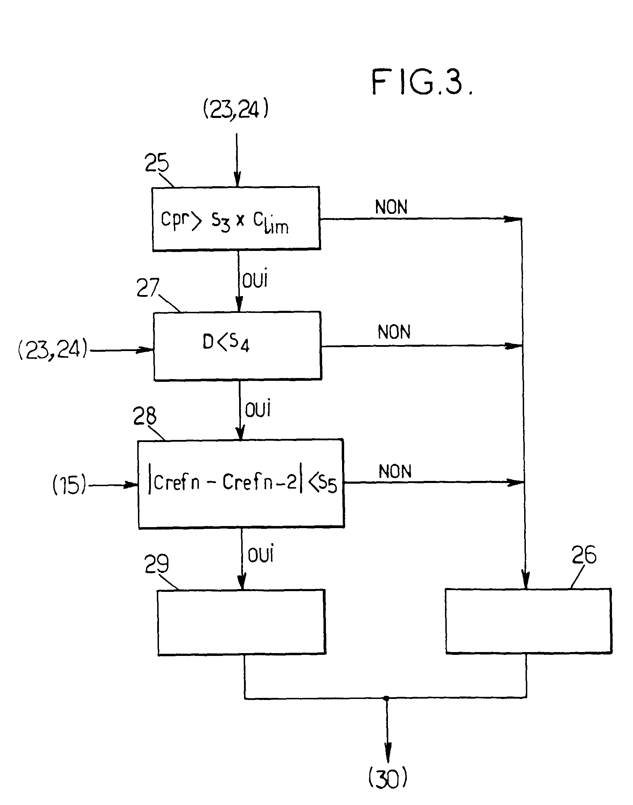

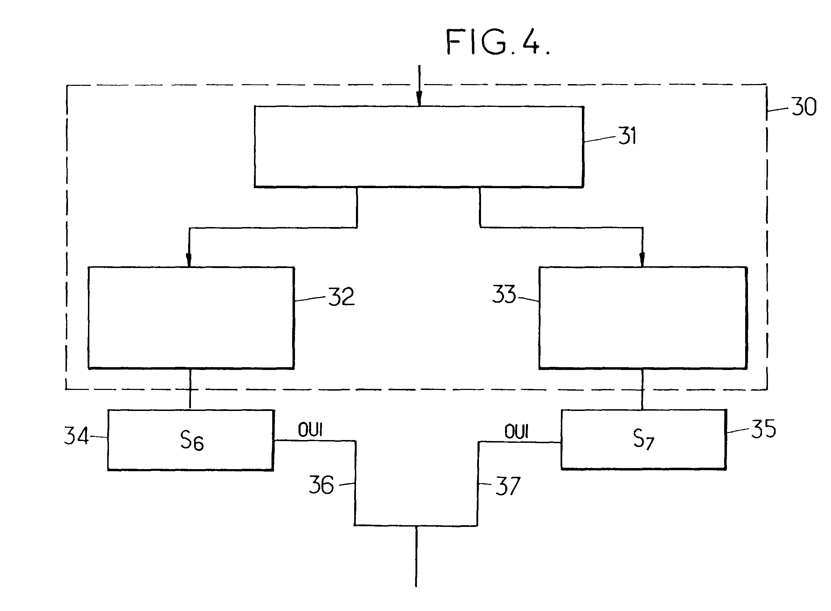

- les figures 1 à 4 représentent les quatre parties complémentaires d'un même schéma bloc représentant les étapes du procédé et les moyens utilisés pour sa mise en oeuvre, pour la détection des ratés de combustion d'un moteur à quatre cylindres et à quatre temps par cycle moteur, dont l'allumage et l'injection au moins sont commandés par un système de contrôle moteur,

Sur la figure 1, on a représenté en 1 un détecteur de position angulaire du vilebrequin du moteur, d'un type bien connu, équipant déjà la plupart des véhicules automobiles, associé à un circuit électronique de contrôle moteur et comprenant une cible tachymétrique, réalisée sous la forme d'une roue 2 à singularités, dentée dans cet exemple, solidaire en rotation du volant d'inertie ou du vilebrequin du moteur, ainsi qu'un capteur 3 fixé sur le moteur, le détecteur 1 étant du type à réluctance variable, dans lequel le capteur 3 est sensible au passage en regard des dents de la roue 2 et délivre un signal électrique pulsatoire de fréquence variable proportionnelle au régime N du moteur, ce signal étant mis en forme dans un circuit 4 délivrant le signal de position moteur au reste du dispositif. En particulier, le signal de position est délivré à l'unité de contrôle moteur 5, commandant l'injection et l'allumage du moteur. En parallèle, le signal de position est envoyé à un étage 6 de calcul du couple gaz Cg produit par chaque phase de combustion-détente dans chaque cylindre du moteur, pour tous les cycles de ce dernier. L'étage 6, appelé capteur logiciel de couple gaz, est donc un calculateur qui calcule le couple gaz à partir du signal de position. Le moteur étant du genre comprenant des repères de mesures, tels que les dents de la roue 2, disposés sur une roue ou couronne solidaire du volant d'inertie ou du vilebrequin, des moyens, tels que des dents de largeur particulière de la roue 2, pour définir une référence d'indexation des repères, et un capteur 3 de défilement des repères, monté fixe au voisinage de la roue ou couronne 2, le circuit de traitement de signal contenu dans l'étage 6 met en oeuvre un procédé de production d'une valeur représentative du couple gaz Cg engendré par chaque combustion du mélange gazeux dans les cylindres du moteur à combustion interne, ce procédé étant tel que celui, par exemple, décrit dans le brevet FR 2 681 425, incorporé dans la présente description par voie de référence, et auquel on se référera pour plus de précisions.
L'étage 6 contient également des moyens de calcul et de mémoire lui permettant d'assurer une compensation par apprentissage des défauts de symétrie de la cible tachymétrique 2 du capteur de position moteur 1. En effet, le couple gaz Cg est calculé à chaque phase de combustion-détente sur un demi-tour moteur correspondant, dans cet exemple de moteur à quatre cylindres et à quatre temps, soit à une moitié soit à l'autre moitié de la périphérie de la roue 2 à partir d'une singularité repérant le passage au point mort haut d'un cylindre de référence. Or les tolérances de fabrication et de centrage de la roue 2 (dispersions dimensionnelles dues à l'usinage des dents, excentration sur le volant moteur ou vilebrequin et dispersions dimensionnelles ou excentration des pièces rotatives du moteur) ont pour conséquence que même pour deux phases de combustion-détente successives rigoureusement identiques, les mesures de vitesse en découlant ne sont pas identiques et fluctuent pour deux cylindres par rapport à celles obtenues pour les deux autres cylindres. Le principe de l'apprentissage mis en oeuvre consiste à apprécier la dissymétrie de la cible rotative 2 en phase de coupure d'injection, commandée par l'unité de contrôle moteur 5, par exemple lorsque le conducteur lève le pied de l'accélérateur à régime élevé. L'étage 6, qui reçoit en 7 l'information de coupure d'injection de l'unité 5, assure un étalonnage de compensation en mesurant, en phase de coupure d'injection, le couple gaz Cg pour deux demi-tour moteur consécutifs, la variation de couple d'une demi-roue 2 à l'autre, correspondant à la différence entre les deux mesures de Cg, le calcul de la moitié de cette différence, et sa mémorisation dans une table, sur toute la plage de régime du moteur, entre un régime proche du ralenti (par exemple de 1200 tr/mn) et le régime maximum, avec des zones de régime consécutives aux pas de 200 tr/mn ou 500 tr/mn par exemple. La compensation des défauts de symétrie de la cible 2 est assurée, en phase d'injection et pour un régime N donné, en ajoutant le demi-écart de couple mémorisé pour la zone de régime contenant N aux mesures de Cg obtenues avec la moitié de cible 2 donnant la valeur de couple la plus faible en coupure d'injection, et en retranchant le demi-écart de couple aux mesures de Cg obtenues avec la moitié de cible 2 donnant la valeur de couple la plus grande en coupure d'injection. En variante, le demi-écart de couple mémorisé est pondéré par un coefficient qui est fonction de la charge et/ou du régime N du moteur. La compensation consiste donc à appliquer une correction proportionnelle au demi-écart de couple en coupure d'injection, avec un coefficient de proportionnalité qui peut être égal à 1 ou fonction de la charge et/ou du régime du moteur.

Cette compensation par addition ou soustraction du demi-écart de couple entre les deux moitiés de la cible rotative 2 est l'application simple aux moteurs à quatre cylindres et quatre temps de la compensation la plus générale, consistant, pour un moteur à z cylindres, à calculer en phase de coupure d'injection, la valeur de Cg sur chaque secteur angulaire de combustion-détente d'un cylindre, de valeur $\frac{2\ tours\ moteur}{z}$, si le moteur est à quatre temps, ou $\frac{1\ tour\ moteur}{z}$ si le moteur est à deux temps, à calculer la moyenne des valeurs de Cg sur tous les secteurs, puis à calculer, pour chaque secteur, la différence entre cette moyenne et la valeur de Cg pour ce secteur, éventuellement à pondérer cette différence par un coefficient fonction de la charge et/ou du régime du moteur, et ensuite à compenser au moins partiellement la valeur calculée de Cg pour chaque secteur en lui ajoutant cette différence éventuellement pondérée. La compensation la plus générale consiste donc à appliquer, pour chaque secteur, aux valeurs de Cg obtenues en phase d'injection pour ce secteur, une correction additive proportionnelle à l'écart entre la moyenne des couples Cg, calculés pour tous les secteurs en phase de coupure d'injection, et le couple Cg calculé pour le secteur considéré également en coupure d'injection.

L'étage 6 délivre ainsi sur sa sortie 8, pour chaque phase de combustion-détente dans chaque cylindre du moteur, un signal représentatif de la valeur du couple gaz Cg produit dans le cylindre correspondant par la combustion correspondante, et corrigé de la dissymétrie de la cible 2.

Parallèlement au contrôle moteur 5 et à l'étage 6, le signal de régime N est transmis à un étage de mémoire 9 comportant des registres à décalages, ayant une capacité minimum de stockage correspondant à trois phases successives du cycle moteur. Cet étage 9 reçoit également, d'un capteur correspondant 10, un signal représentatif de la pression d'air d'alimentation Pca au collecteur d'admission, ainsi, éventuellement, qu'un signal de phase moteur, permettant d'identifier chaque cylindre, et qui est reçu d'un capteur de phase moteur 11, dont la présence n'est pas indispensable dans le dispositif et pour la mise en oeuvre du procédé selon l'invention.

Le capteur de phase moteur 11 est d'un type connu, de structure analogue à celle du détecteur de position 1, et comprenant une roue ou couronne dentée 12 solidaire en rotation d'un arbre à cames, et dont les dents passent en regard d'un capteur 13, fixé sur le moteur.

Dans l'étage de mémorisation 9, on stocke ainsi de manière glissante les signaux de régime moteur N, de pression au collecteur d'admission Pca pour au moins les trois dernières phases successives de cycle moteur, ainsi que les numéros des cylindres correspondants. L'étage 9 est relié à un étage 14 de resynchronisation des événements, permettant de rechercher parmi les valeurs de régime N et de Pca stockées dans l'étage 9 celles qui correspondent, compte tenu du cycle moteur, à une phase de combustion-détente pour laquelle le calcul du couple gaz Cg est en cours dans l'étage 6. En effet, on veut comparer au couple gaz mesuré Cg un couple gaz théorique prévu calculé à partir des valeurs de régime et de Pca ayant conduit à ce couple gaz mesuré Cg. On sait que le couple gaz Cg est le résultat d'une combustion qui s'est déroulée dans la phase combustion-détente précédente, c'est-à-dire dans le demi-tour moteur précédent, pour un moteur à quatre cylindres et quatre temps. Cette combustion est fonction de la quantité de carburant injectée qui, elle-même, dépend des conditions de régime et de Pca correspondantes au cours de la phase d'admission, c'est-à-dire pendant le troisième demi-tour avant le calcul du couple gaz. C'est la raison pour laquelle on mesure le régime N et la pression Pca pendant la phase d'admission ou demi-tour d'admission ayant précédé le demi-tour de combustion-détente au cours du même cycle moteur du cylindre correspondant, et que l'on stocke dans l'étage 9 les valeurs mesurées pour au moins trois phases moteur successives. Donc, pour un demi-tour de compression-détente d'ordre n, l'étape 14 recherche, dans l'étage 9, la valeur du régime N et de la pression Pca d'ordre n-3.

A partir de l'étage 14, les valeurs de régime et de Pca d'ordre n-3 sont entrées en adresse dans une table à deux entrées, contenue dans l'étage d'interpolation cartographique 15, cette carte à deux entrées donnant les valeurs de couple de référence en fonction de valeurs de régime et de valeurs de Pca, qui ne sont pas équidistantes mais resserrées dans les zones de la carte du couple présentant des courbures marquées. Par interpolation linéaire, on déduit à partir des valeurs d'adressage une valeur de couple gaz théorique de référence Cref. Cette cartographie de couple de référence a été préétablie, avec des valeurs moyennes sur 200 demi-tours moteur par exemple, en régime stabilisé du moteur et est utilisée pour tous les cylindres d'un moteur ainsi que pour une famille de moteurs.

Dans le même étage 15, on entre la valeur du signal de régime N d'ordre n-3 en adresse dans une table à une entrée exprimant différentes valeurs du couple limite pour différentes valeurs du régime, le couple limite correspondant au couple gaz mesuré à couple utile nul (pour un même régime), c'est-à-dire au couple limite en-dessous duquel le moteur est entraîné. Par interpolation linéaire dans cette table du couple limite, on déduit, pour la valeur du régime en phase d'ordre n-3, une valeur du couple limite Clim.

Donc, dans l'étage 15, pour chaque demi-tour ou phase de combustion-détente d'ordre n, on calcule par interpolation linéaire dans la table à deux entrées une valeur Cref à partir des valeurs du régime N et de la Pca du demi-tour d'ordre n-3, et parallèlement on effectue une interpolation linéaire dans la table à une entrée exprimant le couple limite en fonction du régime, pour calculer la valeur de couple limite Clim correspondant à la valeur de régime N pour le demi-tour d'ordre n-3. Ce couple limite Clim est utilisé pour déterminer si le moteur est entraînant ou entraîné, selon qu'un couple gaz théorique prévu Cpr, défini ci-dessous, est respectivement supérieur ou inférieur à Clim.

On comprend qu'en phase transitoire, moteur entraîné, et/ou en cas d'usure du moteur, le couple de référence Cref puisse différer sensiblement du couple gaz calculé Cg. Afin d'évaluer au mieux le couple fourni par le moteur pendant chaque demi-tour, on applique en conséquence à la valeur du couple de référence Cref correspondante une correction multiplicative KM. Cette opération est effectuée dans l'étage multiplicateur 17, qui reçoit le signal Cref de l'étage 15 et le coefficient de correction KM de l'étage 16. Dans ce dernier, le coefficient KM est calculé, pour chaque phase de combustion-détente, à partir d'un nombre déterminé m des derniers rapports consécutifs Cg/Cref pour le cylindre correspondant à la phase de combustion-détente considérée. Si z est le nombre des cylindres du moteur, la formule générale exprimant KM est:

$$KM = \frac{1}{m} \left[ \sum_{i=1}^{i=m} Cg_{\,n-iz} / Cref_{\,n-iz} \right]$$

Dans cet exemple, KM est une moyenne, par exemple, des quatre derniers rapports Cg/Cref pour chaque cylindre considéré. Cela permet de prendre en compte les dispersions entre cylindres, entre moteurs, ainsi que le vieillissement du moteur, et d'améliorer la précision du couple gaz théorique prévu Cpr calculé dans l'étage 17 en multipliant Cref par KM.

L'étage 17 délivre ainsi un signal Cpr.lent = KM x Cref.

Pour un cylindre considéré, le rapport Cg/Cref le plus ancien a été calculé pour le demi-tour d'ordre n-16, puisque le moteur est à quatre cylindres et que l'on considère la moyenne des quatre derniers rapports par cylindre. Le coefficient KM est donc donné par la formule :

$$KM = 1/4 \,[Cg_{\,n-16}/Cref_{\,n-16} + Cg_{\,n-12}/Cref_{\,n-12} + Cg_{\,n-8}/Cref_{\,n-8} + Cg_{\,n-4}/Cref_{\,n-4}].$$

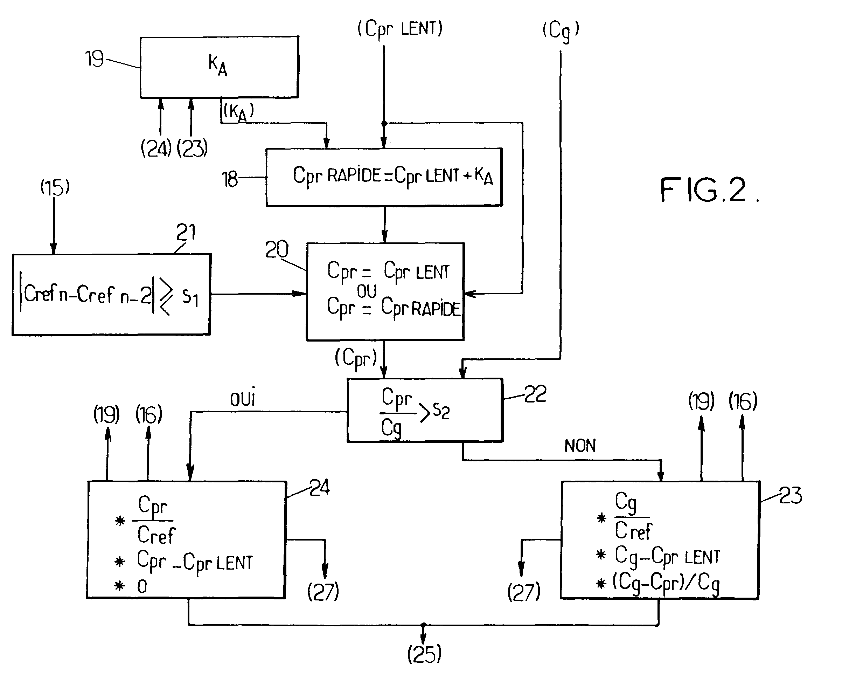

Pour pouvoir calculer KM, il est donc nécessaire, pendant les seize premiers demi-tours après le démarrage du moteur, de stocker Cg et Cref en mémoire. Cette phase d'initialisation étant terminée, on peut seulement ensuite calculer KM dans l'étage 16, puis calculer la valeur Cpr.lent dans l'étage 17. Cette valeur Cpr.lent est transmise à l'étage additionneur 18 (voir figure 2) qui lui ajoute une correction additive KA reçue de l'étage 19 pour délivrer une valeur Cpr.rapide=Cpr.lent+KA. La correction additive KA est élaborée dans l'étage 19 et recalculée pour chaque phase de combustion-détente, afin de compenser le mode de fonctionnement transitoire du moteur. KA, qui est positif en accélération et négatif en décélération, est par exemple égal au filtrage du premier ordre de la différence [Cg - Cpr. lent] indépendamment du cylindre considéré.

Le signal Cpr.lent est transmis en parallèle à l'étage de sélection 20, qui reçoit également le signal Cpr.rapide de l'étage 18, et choisi comme signal de couple théorique prévu Cpr soit Cpr.lent soit Cpr.rapide selon qu'il reçoit de l'étage 21 d'évaluation du mode de fonctionnement stabilisé ou transitoire du moteur soit un signal de fonctionnement stabilisé soit un signal de fonctionnement transitoire, respectivement. A cet effet, on effectue dans l'étage 21 le test suivant : on considère la valeur du couple de référence Cref pour le demi-tour en cours, d'ordre n, et pour le demi-tour antérieur d'ordre n-2. Si la valeur absolue de la différence entre ces deux valeurs de Cref est supérieure à un seuil S1, par exemple égal à 3 N.m, on considère que le moteur est dans un état transitoire. Par contre, si la valeur absolue de la différence entre ces deux valeurs de Cref est inférieure au seuil S1, depuis au moins un nombre déterminé des derniers demi-tours consécutifs, par exemple depuis au moins seize demi-tours, qui correspondent à quatre cycles moteurs, alors on considère que le moteur est dans un état stabilisé. L'étage 21 reçoit Cref n et Cref n-2 de l'étage 15.

Les valeurs de Cg et de Cpr ayant ainsi été obtenues, on les transmet à l'étage de tests 22 où l'on effectue la recherche d'un raté de combustion par comparaison entre ces deux valeurs.

Cette comparaison consiste à calculer le rapport Cpr/Cg et à le comparer à un seuil S2 prédéterminé et mémorisé dans 22, S2 pouvant être constant, par exemple égal à 2, dans une variante simplifiée du procédé. Mais, dans le meilleur mode de réalisation connu du demandeur, le seuil S2 est tiré d'une table cartographique établie en fonction du régime moteur N et de la pression au collecteur d'admission Pca.

On considère qu'il y a un raté de combustion si Cpr/Cg est supérieur à S2.

Si cette condition n'est pas vérifiée, on détecte dans l'étage 23 une absence de raté, et on y stocke en mémoire les valeurs, pour cette phase d'ordre n, du rapport Cg/Cref, transmis à l'étage 16 pour le calcul de la correction multiplicative KM, et de la différence (Cg - Cpr.lent), transmise à l'étage 19 pour le calcul de la correction additive KA, comme décrit ci-dessus.

On y calcule et on y stocke également le rapport

$$\left( \frac{Cg - Cpr}{Cg} \right)$$

nécessaire au calcul de la dérive de Cpr par rapport à Cg comme décrit ci-dessous.

Si la condition testée dans l'étage 22 est vérifiée, on détecte un raté de combustion dans l'étage 24, dans lequel on stocke en mémoire les valeurs du rapport Cpr/Cref et de la différence (Cpr - Cpr.lent) dans lesquelles Cpr prend la place de Cg pour cette phase d'ordre n, afin de ne pas délibérément fausser le calcul suivant des corrections multiplicative KM et additive KA, puisque les mémorisations dans les étages 23 et 24 sont prises en compte dans les étages 16 et 19 à cet effet.

Le rapport Cpr/Cref est donc transmis de l'étage 24 à l'étape 16 et la différence (Cpr - Cpr.lent) de l'étage 24 à l'étage 19. De plus, on mémorise dans l'étage 24 la valeur 0 (correspondant au rapport $\frac{Cg - Cpr}{Cg}$ lorsque Cg est remplacé par Cpr), pour le calcul de la dérive de Cpr par rapport à Cg comme décrit ci-dessous.

Qu'il y ait ou non détection d'un raté en phase n, on recherche ensuite si l'on ne se trouve pas dans l'une des conditions principales qui conduisent à une désactivation de la détection.

A cet effet, on recherche dans l'étage 25 si le moteur est entraînant, en comparant le couple prévu Cpr au produit du couple limite Clim par un coefficient-seuil S3 mémorisé dans 25, et inférieur ou égal à 1.

Si Cpr ≤ S3 x Clim, on considère que le moteur est entraîné et on désactive la détection dans l'étage 26.

Si Cpr > S3 x Clim, on considère que le moteur est entraînant, et on passe à l'étage 27 pour apprécier la dérive de Cpr par rapport à Cg.

Pour cela, on calcule dans 27 une dérive de couple prévu D égale à la moyenne du rapport

$$\left( \frac{Cg - Cpr}{Cg} \right),$$

mémorisé dans 23 et 24, sur les quatre dernières phases de combustion-détente, soit :

$$D = \frac{1}{4} \left[ \left( \frac{Cg-Cpr}{Cg} \right)_n + \left( \frac{Cg-Cpr}{Cg} \right)_{n-1} + \left( \frac{Cg-Cpr}{Cg} \right)_{n-2} + \left( \frac{Cg-Cpr}{Cg} \right)_{n-3} \right]$$

et on compare D à un seuil de dérive S4, par exemple constant et égal à 0,4 ou 40 %.

Lorsque le seuil S2 de détection de raté (auquel on compare Cpr/Cg) est tiré d'une cartographie, le seuil de dérive S4 est avantageusement un seuil de calibration exprimé en % du seuil de raté S2.

Si D ≥ S4, on considère que la dérive du couple prévu Cpr par rapport à Cg est exagérée et on désactive la détection en 26, jusqu'à ce que la dérive D redevienne inférieure au seuil S4.

Si D < S4, on compare dans l'étage suivant 28 la valeur absolue de la différence entre Cref n et Cref n-2, déjà calculée et prise en compte dans l'étage 21, à un seuil S5, qui, par simplification, peut être égal au seuil S1 de l'étage 21. Si ‖ Cref.n - Cref. n-2 ‖ ≥ S5, on considère que le moteur est en mode transitoire pour lequel on commande en 26 la désactivation de la détection. Dans le cas contraire, comme aucune des trois conditions principales précitées de désactivation n'est vérifiée aux étages 25, 27 et 28, on valide en 29 la détection effectuée.

Une condition supplémentaire de désactivation de la détection consiste à maintenir la détection désactivée aussi longtemps qu'il n'y a pas eu, dans l'étage 6, un apprentissage de compensation des défauts de symétrie de la cible tachymétrique 2, donc tant qu'il n'y a pas eu de définition d'au moins un terme de compensation des variations de couple en coupure d'injection utilisable pour tous les régimes moteur dans au moins une plage de régime contenant ceux pour lesquels est intervenue la coupure correspondante d'injection.

La détection peut être désactivée lorsque d'autres conditions sont rencontrées, telles qu'une coupure d'injection, une température du liquide de refroidissement du moteur qui est inférieure à un seuil, etc....

Les résultats des détections (présence ou absence de ratés) sont transmis à un étage 30 dit de "fenêtrage", dans lequel on stocke en 31 les résultats de détection pour toutes les phases de combustion-détente par tranche de 1000 tours moteur, c'est-à-dire les résultats de détection de 2000 demi-tours moteur. Ces résultats sont traités, d'une part, dans une fenêtre de 200 tours moteur 32, dans laquelle on calcule le taux ou nombre de ratés, par tranche de 200 tours moteur, c'est-à-dire dans les détections effectuées pendant 400 demi-tours. D'autre part, ces résultats de détection sont traités dans une fenêtre de 1000 tours moteur 33, où on calcule de manière analogue le taux ou le nombre de ratés dans les détections effectuées sur 2000 demi-tours moteur.

Le taux (ou nombre) calculé en 32 dans la fenêtre de 200 tours est comparé, dans le comparateur 34, à un seuil S6, prédéterminé et constant, dont le dépassement conduit à l'émission en 36 d'un signal d'alarme témoignant de la dégradation du catalyseur.

De même, le taux (ou nombre) calculé en 33 sur la fenêtre de 1000 tours est comparé, dans le comparateur 35, à un seuil d'émission S7, constant et par exemple de l'ordre de 1,5 %, le dépassement de ce seuil étant indiqué par un signal d'alerte en 37, témoignant d'un taux de composants nocifs dans les gaz d'échappement trop important. Ces signaux d'alarme peuvent par exemple provoquer l'allumage d'une lampe au tableau de bord du véhicule.

En variante, on peut, dans le procédé et le dispositif décrit ci-dessus, inverser le traitement appliqué aux valeurs de Cg et Cref, et donc corriger les valeurs du couple de gaz Cg en des valeurs de couple gaz calculé Cgc pour les comparer à des valeurs du couple de référence interpolées mais non corrigées par les corrections multiplicative et additive.

Eventuellement, chacune des deux variables Cg et Cref peut être corrigée d'une manière qui lui est spécifique pour obtenir des valeurs Cgc et Cpr dont le rapport Cpr/Cgc est comparé au seuil de détection de raté.

Dans l'exemple décrit ci-dessus, on peut considérer que les valeurs de Cg font l'objet d'une correction multiplicative par un coefficient KM = 1 et d'une correction additive par un terme KA = 0, de sorte que Cg = Cgc.

Dans une autre variante, on peut substituer à la prise en compte de la pression au collecteur d'admission d'air Pca, la prise en compte de tout autre signal représentatif du remplissage unitaire des cylindres du moteur, par exemple un signal de débit d'air d'alimentation, ou un signal d'angle d'ouverture de l'obturateur rotatif ou papillon commandant ou régulant l'alimentation en air du moteur.

**Revendications**

1.  Procédé de détection des ratés de combustion d'un moteur à combustion interne et allumage commandé, comprenant les étapes consistant à :

    a) élaborer (6), pour chaque phase de combustion-détente dans chaque cylindre du moteur, un signal représentatif de la valeur du couple gaz (Cg) produit dans le cylindre correspondant par la combustion correspondante,

    b) mesurer (1) la vitesse de rotation (N) du moteur et élaborer (4) un signal représentatif de cette vitesse pendant au moins la phase d'admission ayant précédé la phase de combustion-détente du cylindre correspondant,

    c) mesurer (10) un paramètre représentatif du remplissage unitaire du cylindre correspondant et élaborer un signal représentatif de ce remplissage unitaire pendant au moins la phase d'admission ayant précédé la phase de combustion-détente au cours du même cycle moteur du cylindre correspondant,

    d) entrer les signaux représentatifs de vitesse (N) et de remplissage unitaire en adresses dans une cartographie (15) de couple gaz théorique de référence, et en déduire un signal représentatif d'un couple de référence (Cref),

    caractérisé en ce qu'il comprend de plus les étapes consistant à :

    e) affecter (17) l'un au moins des signaux représentatifs de la valeur du couple gaz (Cg) et du couple de référence (Cref) d'une correction multiplicative (KM) respective associée au cylindre correspondant pour obtenir des signaux proportionnels à la valeur du couple gaz (Cg) et au couple de référence (Cref) respectivement, et affecter de plus l'un au moins des signaux proportionnels d'une correction additive (KA) en mode de fonctionnement transitoire du moteur, et en déduire un signal représentatif d'un couple théorique prévu (Cpr) à partir du signal proportionnel au couple de référence (Cref), et un signal représentatif d'un couple gaz calculé (Cgc) à partir du signal proportionnel à la valeur du couple gaz (Cg),

    f) calculer (22) le rapport du signal représentatif du couple théorique prévu (Cpr) sur le signal représentatif du couple gaz calculé (Cgc), et considérer qu'il y a un raté de combustion lorsque ce rapport est supérieur à un seuil de rapport déterminé (S2).

2. Procédé selon la revendication 1, caractérisé en ce qu'il consiste à tirer le seuil de rapport déterminé (S2) d'une cartographie établie en fonction de la vitesse de rotation (N) du moteur et d'un paramètre représentatif du remplissage unitaire des cylindres du moteur.

3. Procédé selon l'une des revendications 1 et 2, caractérisé en ce qu'il consiste à prendre la pression Pca au collecteur d'admission d'air pour le cylindre correspondant comme paramètre représentatif du remplissage unitaire des cylindres du moteur.

4. Procédé selon l'une quelconque des revendications 1 à 3, caractérisé en ce qu'il consiste à affecter uniquement le signal représentatif du couple de référence (Cref) de la correction multiplicative (KM), et, en mode de fonctionnement transitoire du moteur, à affecter uniquement le signal proportionnel correspondant de la correction additive (KA).

5. Procédé selon l'une quelconque des revendications 1 à 4, caractérisé en ce qu'il comprend l'étape consistant de plus à élaborer (6) le signal représentatif du couple gaz calculé (Cgc) à partir du signal de position angulaire du moteur.

6. Procédé selon la revendication 5, caractérisé en ce qu'il consiste à calculer le couple gaz (Cg) pour chacun des secteurs angulaires de rotation du moteur correspondant respectivement à une phase à combustion-détente de chaque cylindre du moteur, et sur au moins un cycle moteur, en coupure d'injection à au moins un régime moteur donné supérieur à un régime voisin du ralenti, à calculer la moyenne des couples gaz (Cg) pour tous les secteurs angulaires, à définir pour chaque secteur un terme de compensation égal au produit de la différence entre la moyenne des couples et le couple gaz pour ce secteur par un coefficient de proportionnalité, égal à 1 ou fonction de la charge et/ou du régime (N) du moteur, et à ajouter pour chaque secteur le terme de compensation correspondant au couple gaz (Cg) obtenu en phase d'injection pour ce secteur sur au moins une plage de régime, contenant les régimes pour lesquels la coupure d'injection a été appliquée.

7. Procédé selon la revendication 6, pour un moteur à quatre cylindres et quatre temps, caractérisé en ce qu'il consiste à calculer le couple gaz (Cg) pour chacun d'au moins deux demi-tours moteur successifs, en coupure d'injection, à calculer la moitié de la variation de couple qui en résulte d'un demi-tour moteur à l'autre, à définir le terme de compensation comme étant égal au produit de la moitié de la variation de couple par le coefficient de proportionnalité, et à ajouter le terme de compensation aux valeurs du couple gaz (Cg) obtenues en phase d'injection pour les demi-tours moteur procurant la valeur du couple gaz la plus faible en phase de coupure d'injection ou respectivement à retrancher le terme de compensation des valeurs du couple gaz (Cg) obtenues en phase d'injection pour les demi-tours moteur procurant la valeur du couple gaz (Cg) la plus forte en phase de coupure d'injection, sur ladite plage de régime.

8. Procédé selon l'une quelconque des revendications 1 à 7, caractérisé en ce qu'il comprend l'étape consistant à déduire les signaux de couple de référence (Cref) d'une cartographie (15) de couple globale pour l'ensemble des cylindres du moteur et valable pour une famille de moteurs, cette cartographie étant préétablie en régime stabilisé du moteur et mémorisée sous la forme d'une table cartographique à deux entrées exprimant des valeurs du couple gaz théorique de référence pour différentes valeurs d'une part de la vitesse du moteur (N), et, d'autre part, de la pression au collecteur d'admission (Pca), lesquelles valeurs sont choisies pour optimiser le calcul du couple de référence (Cref) par interpolation linéaire.

9. Procédé selon l'une quelconque des revendications 1 à 8, caractérisé en ce qu'il comprend l'étape consistant à calculer (16) la correction multiplicative pour chaque phase de combustion-détente du moteur comme étant égale à la moyenne (KM) d'un nombre déterminé des derniers rapports consécutifs Cg/Cref pour le cylindre correspondant à la phase de combustion-détente considérée.

10. Procédé selon l'une quelconque des revendications 1 à 9, caractérisé en ce que la correction additive (KA) est égale au filtrage de premier ordre de la différence entre les signaux représentatifs du couple gaz calculé (Cgc) et du couple théorique prévu (Cpr) en régime stabilisé, indépendamment des cylindres.

11. Procédé selon l'une quelconque des revendications 1 à 10, caractérisé en ce qu'il comprend l'étape consistant à déterminer (21) le mode stabilisé ou transitoire de fonctionnement du moteur en fonction de la différence, de préférence en valeur absolue, entre deux valeurs du couple de référence (Cref) calculées l'une pour la phase de combustion-détente considérée, et l'autre pour l'avant-dernière phase de combustion-détente précédente, et à considérer que le mode est transitoire si cette différence est supérieure à un seuil déterminé (S1), et stabilisé si cette différence est inférieure audit seuil (S1) depuis un nombre déterminé de cycles moteur consécutifs.

12. Procédé selon l'une quelconque des revendications 9 et 10, caractérisé en ce qu'il comprend l'étape consistant à stocker en mémoire (19, 23, 24) un nombre déterminé des dernières valeurs successives du rapport du couple gaz (Cg) sur le couple de référence (Cref) et la dernière valeur de la correction additive (KA) nécessaires au calcul des corrections (KM, KA), et à stocker la valeur calculée correspondante du couple prévu (Cpr) à la place d'une valeur du couple gaz (Cg) si, pour cette valeur de (Cg), on détecte (22) un raté de combustion.

13. Procédé selon l'une quelconque des revendications 1 à 12, pour moteur équipé d'un catalyseur, caractérisé en ce qu'il comprend l'étape consistant de plus :

à mesurer (32, 33) le nombre ou le taux de ratés de combustion détectés pendant des fenêtres de respectivement N1 et N2 tours moteur, par exemple 200 et 1000 tours,
à comparer (34, 35) chacune de ces mesures à au moins un seuil (S6, S7), propre à chaque fenêtre, et
à donner un signal d'alarme (36) correspondant à un état critique du catalyseur en cas de dépassement du seuil (S6) propre à la fenêtre (32) de N1 tours, et/ou un signal d'alarme (37) correspondant à un dépassement d'un seuil d'émission de composants nocifs dans les gaz d'échappement en cas de dépassement du seuil (S7) propre à la fenêtre (33) de N2 tours.

14. Procédé selon l'une quelconque des revendications 1 à 13, caractérisé en ce qu'il comprend l'étape consistant à désactiver la détection des ratés en phase de coupure d'injection et/ou en phase moteur entraîné, cette dernière phase étant détectée lorsque la pression au collecteur d'admission (Pca) devient inférieure à un seuil de pression fonction de la vitesse de rotation (N) du moteur et/ou lorsque le couple prévu (Cpr) est inférieur à un couple limite, qui peut par exemple correspondre au couple gaz calculé à couple utile nul pour une vitesse identique de rotation (N) du moteur.

15. Procédé selon la revendication 14, caractérisé en ce qu'il comprend l'étape consistant à entrer le signal de vitesse (N) en adresse dans une table (15) à une entrée, exprimant les valeurs du couple limite pour différentes valeurs de la vitesse (N) du moteur, et à en déduire par interpolation, de préférence linéaire, un signal représentatif du couple limite (Clim) que l'on compare au couple théorique prévu (Cpr) pour en déduire que le moteur est entraînant ou entraîné selon que (Cpr) est supérieur ou inférieur à (Clim).

16. Procédé selon la revendication 15, caractérisé en ce qu'il comprend l'étape consistant à désactiver (22, 24) la détection des ratés si le couple prévu (Cpr) est inférieur au produit du couple limite (Clim) par un facteur (S7) inférieur ou égal à 1.

17. Procédé selon l'une quelconque des revendications 1 à 16, caractérisé en ce qu'il comprend l'étape consistant à désactiver (28, 26) la détection des ratés si la valeur absolue de la différence entre les couples de référence (Cref) pour les phases de combustion-détente d'ordres n et n-2 est supérieure à un seuil (S5).

18. Procédé selon l'une quelconque des revendications 1 à 17, caractérisé en ce qu'il comprend l'étape consistant à désactiver (27, 26) la détection des ratés en cas de dérive exagérée des signaux représentatifs du couple gaz calculé (Cgc) et du couple théorique prévu (Cpr) l'un par rapport à l'autre.

19. Procédé selon la revendication 18, caractérisé en ce qu'il consiste à considérer qu'il y a dérive exagérée lorsque la valeur moyenne du rapport

$$\left| \frac{Cgc - Cpr}{Cgc} \right|$$

calculée pour un nombre donné des dernières phases de combustion-détente excède un seuil de calibration (S4), et à réactiver la détection des ratés dès que ladite valeur moyenne redevient inférieure au seuil de calibration (S4).

**20.** Procédé selon l'une quelconque des revendications 8 à 19 telle que rattachée à la revendication 6, caractérisé en ce qu'il comprend l'étape consistant à désactiver la détection des ratés aussi longtemps qu'il n'y a pas eu définition d'au moins un terme de compensation des variations de couple en coupure d'injection.

**21.** Procédé selon l'une quelconque des revendications 8 à 20, caractérisé en ce qu'il consiste à substituer au signal (Pca) tout autre signal représentatif du remplissage unitaire des cylindres du moteur, tel qu'un signal de débit d'air ou d'angle d'ouverture d'un papillon de commande ou de régulation d'alimentation en air.

**22.** Dispositif de détection des ratés de combustion d'un moteur à combustion interne et allumage commandé, pour la mise en oeuvre du procédé selon l'une quelconque des revendications 1 à 21 précédentes, caractérisé en ce qu'il comprend :

au moins un capteur (1) de vitesse de rotation du moteur, délivrant un signal de vitesse (N),
au moins un capteur (10) d'un paramètre représentatif du remplissage unitaire des cylindres du moteur tel qu'un capteur de pression au collecteur d'admission d'air, un débitmètre d'air d'admission ou un capteur d'angle du papillon, délivrant un signal représentatif de ce paramètre,
des moyens de calcul (6) du couple gaz (Cg), à partir du signal de vitesse moteur (N),
des moyens de mémoire (15, 22, 23, 24), pour stocker des cartographies et des seuils, des moyens de calculs (16, 17, 18, 19) et des moyens de comparaison (21, 22) permettant de calculer et/ou stocker des valeurs du couple de référence (Cref), du couple prévu (Cpr), du couple gaz calculé (Cgc), des corrections (KM, KA) multiplicative et additive, du rapport Cpr/Cgc et de les comparer à des seuils (S1, S2, S3, S4, S5) pour déterminer la présence de ratés de combustion (22, 29).

## Claims

**1.** Method for detecting misfires in a controlled-ignition internal combustion engine, comprising the steps consisting in:

a) formulating (6), for each combustion/expansion phase in each cylinder of the engine, a signal representative of the value of the gas torque (Cg) produced in the corresponding cylinder by the corresponding combustion,
b) measuring (1) the rotational speed (N) of the engine and formulating (4) a signal representative of this speed for at least the inlet phase which preceded the combustion/expansion phase in the corresponding cylinder,
c) measuring (10) a parameter representative of the unitary filling of the corresponding cylinder and formulating a signal representative of this unitary filling for at least the inlet phase which preceded the combustion/expansion phase during the same engine cycle in the corresponding cylinder,
d) entering the signals representative of speed (N) and of unitary filling as addresses in a reference theoretical gas torque map (15), and deducing therefrom a signal representative of a reference torque (Cref),

characterized in that it additionally comprises the steps consisting in:

e) assigning (17) to at least one of the signals representative of the value of the gas torque (Cg) and of the reference torque (Cref) a respective multiplicative correction factor (KM) associated with the corresponding cylinder so as to obtain signals which are proportional to the value of the gas torque (Cg) and to the reference torque (Cref) respectively, and, in addition, assigning to at least one of the proportional signals, an additive correction factor (KA) when the engine is running in transient mode, and deducing therefrom a signal representative of an expected theoretical torque (Cex) on the basis of the signal which is proportional to the reference torque (Cref), and a signal representative of a calculated gas torque (Cgc) on the basis of the signal which is proportional to the value of the gas torque (Cg),
f) calculating (22) the ratio of the signal representative of the expected theoretical torque (Cex) to the signal representative of the calculated gas torque (Cgc), and deeming there to be a misfire when this ratio is higher than a given ratio threshold (S2).

**2.** Method according to claim 1, characterized in that it consists in taking the given ratio threshold (S2) from a map established as a function of the rotational speed (N) of the engine and of a parameter representative of the unitary filling of the cylinders of the engine.

**3.** Method according to either of claims 1 and 2, characterized in that it consists in adopting the pressure Pim at the air inlet manifold for the corresponding cylinder as the parameter representative of the unitary filling of the cylinders of the engine.

4. Method according to any one of claims 1 to 3, characterized in that it consists in assigning the multiplicative correction factor (KM) only to the signal representative of the reference torque (Cref) and, when the engine is running in transient mode, in assigning the additive correction factor (KA) only to the corresponding proportional signal.

5. Method according to any one of claims 1 to 4, characterized in that it comprises the step consisting additionally in formulating (6) the signal representative of the calculated gas torque (Cgc) on the basis of the engine angular position signal.

6. Method according to claim 5, characterized in that it consists in calculating the gas torque (Cg) for each of the angular sectors of rotation of the engine corresponding respectively to a combustion/expansion phase of each cylinder of the engine, and over at least one engine cycle, with fuel injection being cut off at least at a given engine speed which is higher than a speed close to low idle, in calculating the mean of the gas torques (Cg) for all of the angular sectors, in defining, for each sector, a compensation term which is equal to the product of the difference between the mean of the torques and the gas torque for this sector times a proportionality coefficient which is equal to 1 or a function of the load and/or the speed (N) of the engine, and in adding, for each sector, the corresponding compensation term to the gas torque (Cg) obtained in the injection phase for this sector over at least one speed range containing the speeds for which the fuel-injection cut-off was applied.

7. Method according to claim 6, for a four-stroke four-cylinder engine, characterized in that it consists in calculating the gas torque (Cg) for each of at least two successive engine half revolutions, with the fuel injection cut off, in calculating half of the resulting torque variation from one engine half revolution to the next, in defining the compensation term as being equal to the product of half the torque variation times the proportionality coefficient, and in adding the compensation term to the gas torque values (Cg) obtained during fuel-injection phase for the engine half revolutions which gave the lowest gas torque value in the phase during which the fuel injection was cut off, or respectively in taking the compensation term away from the gas torque values (Cg) obtained in the fuel-injection phase for the engine half revolutions giving the highest gas torque value (Cg) in the phase when fuel injection was cut off, over said speed range.

8. Method according to any one of claims 1 to 7, characterized in that it comprises the step consisting in deducing the reference torque signals (Cref) from an overall torque map (15) for all of the cylinders of the engine and valid for a family of engines, this map being preestablished with the engine at a stabilized speed and stored in memory in the form of a tabulated map with two entries expressing the values of the theoretical reference gas torque for different values, on the one hand, of the engine speed (N) and, on the other hand, the pressure at the inlet manifold (Pim), which values are selected in order to optimize the calculation of the reference torque (Cref) by linear interpolation.

9. Method according to any one of claims 1 to 8, characterized in that it comprises the step consisting in calculating (16) the multiplicative correction factor for each combustion/expansion phase of the engine as being equal to the mean (KM) of a given number of the latest consecutive Cg/Cref ratios for the cylinder corresponding to the combustion/expansion phase under consideration.

10. Method according to any one of claims 1 to 9, characterized in that the additive correction factor (KA) is equal to the first-order filtering of the difference between the signals representative of the calculated gas torque (Cgc) and of the expected theoretical torque (Cex) at stabilized speed, independently of the cylinders.

11. Method according to any one of claims 1 to 10, characterized in that it comprises the step consisting in determining (21) whether the engine is running in stabilized or in transient mode as a function of the difference, preferably in absolute value, between two values of the reference torque (Cref) which are calculated, one of them for the combustion/expansion phase under consideration, and the other for the previous last but one combustion/expansion phase, and in deeming the mode to be transient if this difference is higher than a given threshold (S1), and to be stabilized if this difference is below said threshold (S1) from a given number of consecutive engine cycles.

12. Method according to either of claims 9 and 10, characterized in that it comprises the step consisting in storing in memory (19, 23, 24) a given number of the latest successive values of the ratio of the gas torque (Cg) to the reference torque (Cref) and the latest value of the additive correction factor (KA) which are needed to calculate the correction factors (KM, KA), and in storing the corresponding calculated value of the expected torque (Cex) in place of a value of the gas torque (Cg) if a misfire is detected (22) for this value of (Cg).

13. Method according to any one of claims 1 to 12 for an engine equipped with a catalytic converter, characterized in that it comprises the step consisting, in addition:

in measuring (32, 33) the number or level of misfires detected during windows of respectively N1 and N2 engine revolutions, for example 200 and 1000 revolutions,
in comparing (34, 35) each of these measurements with at least one threshold (S6, S7) specific to each window, and
in giving a warning signal (36) corresponding to a critical state of the catalytic converter in the event of the threshold (S6) specific to the N1-revolutions window (32) being exceeded, and/or a warning signal (37) corresponding to a threshold of the emission of harmful components in the exhaust gases being exceeded in the case of the threshold (S7) specific to the N2-revolutions window (33) being exceeded.

14. Method according to any one of claims 1 to 13, characterized in that it comprises the step consisting in deactivating the detection of misfires in phases in which fuel injection is cut off and/or in phases in which the engine is being driven, the latter phase being detected when the pressure at the inlet manifold (Pim) drops below a pressure threshold which is a function of the rotational speed (N) of the engine and/or when the expected torque (Cex) is lower than a limiting torque, which may, for example, correspond to the calculated gas torque for zero useful torque for the same rotational speed (N) of the engine.

15. Method according to claim 14, characterized in that it comprises the step consisting in entering the speed signal (N) as an address into a single-entry table (15) expressing the values of the limiting torque for different values of the speed (N) of the engine, and in deducing therefrom, by interpolation, preferably linear interpolation, a signal representative of the limiting torque (Clim) which is compared with the expected theoretical torque (Cex) in order to deduce therefrom whether the engine is driving or being driven depending on whether (Cex) is greater than, or is lower than (Clim).

16. Method according to claim 15, characterized in that it comprises the step consisting in deactivating (22, 24) the detection of misfires if the expected torque (Cex) is less than the product of the limiting torque (Clim) times a factor (S7) which is less than or equal to 1.

17. Method according to any one of claims 1 to 16, characterized in that it comprises the step consisting in deactivating (28, 26) the detection of misfires if the absolute value of the difference between the reference torques (Cref) for the combustion/expansion phases of orders n and n-2 is above a threshold (S5).

18. Method according to any one of claims 1 to 17, characterized in that it comprises the step consisting in deactivating (27, 26) the detection of misfires in the event of excessive drift in the signals representative of the calculated gas torque (Cgc) and of the expected theoretical torque (Cex) one with respect to the other.

19. Method according to claim 18, characterized in that it consists in deeming there to be excessive drift when the mean value of the ratio $(\frac{Cgc-Cex}{Cgc})$ calculated for a given number of the latest combustion/expansion phases exceeds a calibration threshold (S4), and in reactivating the detection of misfires as soon as said mean value drops back below the calibration threshold (S4).

20. Method according to any one of claims 8 to 19 as attached to claim 6, characterized in that it comprises the step consisting in deactivating the detection of misfires for as long as there has been no definition of at least one term for compensating for variations in torque when fuel injection is cut off.

21. Method according to any one of Claims 8 to 20, characterized in that it consists in substituting for the signal (Pim) any other signal representative of the unitary filling of the cylinders of the engine, such as a signal relating to the air flow rate or to the degree of openness of a butterfly valve controlling or regulating the air supply.

22. Device for detecting misfires in a controlled-ignition internal combustion engine, for the implementation of the method according to any one of the preceding claims 1 to 21, characterized in that it comprises:

at least one sensor (1) for sensing the rotational speed of the engine, delivering a speed signal (N),
at least one sensor (10) for sensing a parameter representative of the unitary filling of the cylinders of the engine, such as a sensor sensing the pressure at the air inlet manifold, an air inlet flow meter or a sensor for sensing the butterfly valve angle, delivering a signal representative of this parameter,

means for calculating (6) the gas torque (Cg), on the basis of the engine speed signal (N),

memory means (15, 22, 23, 24) for storing maps and thresholds, calculation means (16, 17, 18, 19) and comparison means (21, 22) making it possible to calculate and/or to store values of the reference torque (Cref), of the expected torque (Cex), of the calculated gas torque (Cgc), of the multiplicative and additive correction factors (KM, KA), and of the Cex/Cgc ratio and to compare them with thresholds (S1, S2, S3, S4, S5) in order to determine the presence of misfires (22, 29).

**Patentansprüche**

1. Verfahren zur Erfassung von Verbrennungsaussetzern einer Brennkraftmaschine mit Funkenzündung, mit den Schritten bestehend aus:

   a) Verarbeiten (6) eines Signals für jede Entspannung-Verbrennungsphase in jedem Zylinder des Motors, das für den Wert des in dem entsprechenden Zylinder durch die entsprechende Verbrennung erzeugten Gasmoments (Cg) repräsentativ ist,
   b) Messen (1) der Drehzahl (N) des Motors und Verarbeiten (4) eines dieser Drehzahl repräsentativen Signals während wenigstens der Ansaugphase, die der Entspannung-Verbrennungsphase des entsprechenden Zylinders vorausgegangen ist,
   c) Messen (10) eines der spezifischen Befüllung des entsprechenden Zylinders repräsentativen Parameters und Verarbeiten eines der spezifischen Befüllung repräsentativen Signals während wenigstens der Ansaugphase, die der Verbrennungsphase und der Entspannung im Verlauf des gleichen Motorzyklus des entsprechenden Zylinders vorausgegangen ist,
   d) Eingeben der repräsentativen Signale für die Drehzahl (N) und die spezifische Befüllung als Adressen in eine Kartierung (15) für theoretische Bezugs-Gasmomente und daraus Ableiten eines Signals, das repräsentativ für ein Bezugsmoment (Cref) ist,

   dadurch gekennzeichnet, daß es ferner die Schritte umfaßt bestehend aus:

   e) Bearbeiten (17) wenigstens eines der für den Wert des Gasmoments (Cg) und des Bezugsmoments (Cref) repräsentativen Signale mit einer Multiplikationskorrektur (KM), die jeweils dem entsprechenden Zylinder zugeordnet ist, um Signale zu erhalten, die dem Wert des Gasmoments (Cg) bzw. des Bezugsmoments (Cref) proportional sind, und Bearbeiten ferner wenigstens eines der proportionalen Signale mit einer Additionskorrektur (KA) im Einschwingbetrieb des Motors, und Ableiten eines repräsentativen Signals für ein vorgesehenes theoretisches Moment (Cpr) ausgehend von dem Signal, das zu dem Bezugsmoment (Cref) proportional ist, und eines repräsentativen Signals für ein berechnetes Gasmoment (Cgc) ausgehend von dem Signal, das zu dem Wert des Gasmoments (Cg) proportional ist.
   f) Berechnen (22) des Verhältnisses des repräsentativen Signals für das vorgesehene theoretische Moment (Cpr) zu dem repräsentativen Signal für das berechnete Gasmoment (Cgc) und Erwägen, das ein Verbrennungsaussetzer vorliegt, wenn das Verhältnis größer ist als ein bestimmter Schwellenwert des Verhältnisses (2).

2. Verfahren nach Anspruch 1, dadurch gekennzeichnet, daß es darin besteht, den bestimmten Schwellenwert des Verhältnisses (S2) aus einer in Abhängigkeit von der Drehzahl (N) des Motors und eines für die spezifische Füllung des Zylinders des Motors repräsentativen Parameter eingerichteten Kartierung herauszuziehen.

3. Verfahren nach einem der Ansprüche 1 und 2, dadurch gekennzeichnet, daß es darin besteht, den Druck Pca des Luftansaugrohres für den entsprechenden Zylinder als repräsentativen Parameter für die spezifische Befüllung des Zylinders des Motors zu nehmen.

4. Verfahren nach einem der Ansprüche 1 bis 3, dadurch gekennzeichnet, daß es darin besteht, allein das Signal zu bearbeiten, das für das Bezugsmoment (Cref) repräsentativ ist, mit der Multiplikationskorrektur (KM) zu bearbeiten, und im Einschwingbetrieb des Motors allein das Signal zu bearbeiten, das entsprechend der Additionskorrektur (KA) proportional ist.

5. Verfahren nach einem der Ansprüche 1 bis 4, dadurch gekennzeichnet, daß es den Schritt umfaßt bestehend ferner aus einem Bearbeiten (6) des repräsentativen Signals des berechneten Gasmoments (Cgc) ausgehend von dem Signal einer Winkelposition des Motors.

6. Verfahren nach Anspruch 5, dadurch gekennzeichnet, daß es darin besteht, das Gasmoment (Cg) für jeden Winkelabschnitt der Drehzahl entsprechend jeweils einer Entspannung-Verbrennungsphase für jeden Zylinder des Motors zu berechnen, und über wenigstens einen Motorzyklus bei Unterbrechung der Einspritzung bei wenigstens einer gegebenen höheren Motordrehzahl als einer angrenzenden Leerlaufdrehzahl den Mittelwert der Gasmomente (Cg) für alle diese Winkelabschnitte zu berechnen, um für jeden Abschnitt ein Kompensationsglied gleich dem Produkt der Differenz zwischen dem Mittelwert der Momente und dem Gasmoment für diesen Abschnitt durch einen Proportionalitätskoeffizienten des Wertes 1 oder abhängig von der Last und/oder der Drehzahl (N) des Motors zu definieren, und um für jeden Abschnitt das Kompensationsglied hinzuzufügen, das dem in der Einspritzphase für diesen Abschnitt über wenigstens einen Drehzahlbereich, einschließlich der Drehzahlen, für welche die Unterbrechung der Einspritzung angewendet wurde, erhaltenen Gasmoments (Cg) entspricht.

7. Verfahren nach Anspruch 6 für einen Motor mit vier Zylindern und vier Takten, dadurch gekennzeichnet, daß es darin besteht, das Gasmoment (Cg) für jede von wenigstens zwei aufeinanderfolgenden Motor-Halbdrehungen bei Unterbrechung der Einspritzung zu berechnen, den Mittelwert der Momentschwankung zu berechnen, die sich aus einer Motor-Halbdrehung zur anderen ergibt, das Kompensationsglied als gleich dem Produkt des Mittelwertes der Momentschwankung mit dem Proportionalitätskoeffizienten zu definieren, und für die Motor-Halbumdrehungen, die in der Unterbrechungsphase der Einspritzung den geringsten Momentwert liefern, das Kompensationsglied der in der Einspritzphase erhaltenen Gasmomentwerte (Cg) hinzuzufügen oder jeweils für die Motor-Halbumdrehungen, die in der Unterbrechungsphase der Einspritzung den stärksten Wert des Gasmomentes (Cg) über den Drehzahlbereich liefern, das Kompensationsglied der in der Einspritzphase erhaltenen Gasmomentwerte (Cg) abzuziehen.

8. Verfahren nach einem der Ansprüche 1 bis 7, dadurch gekennzeichnet, daß es den Schritt umfaßt bestehend aus einem Ableiten der Bezugsmomentsignale (Cref) aus einer Kartierung (15) globaler Momente für die Gesamtheit der Zylinder des Motors, die für eine Motorenfamilie gültig sind, wobei diese Kartierung bei stabilisierter Drehzahl des Motors vorverfaßt ist und gespeichert ist in Form einer kartographischen Tabelle mit zwei Einträgen, die die Werte des theoretischen Bezugsgasmoments für unterschiedliche Werte einerseits der Motordrehzahl (M) und andererseits des Luftansaugdruckes (Pca) wiedergeben, wobei diese Werte gewählt werden, um die Berechnung des Bezugsmomentes (Cref) durch lineare Interpolation zu optimieren.

9. Verfahren nach einem der Ansprüche 1 bis 8, dadurch gekennzeichnet, daß es umfaßt den Schritt bestehend aus einem Berechnen (16) der Mutiplikationskorrektur für jede Entspannung-Verbrennungsphase des Motors als gleich dem Mittelwert (KM) einer bestimmten Anzahl der letzten aufeinanderfolgenden Angaben (Cg/Cref) für den entsprechenden Zylinder in der betreffenden Entspannung-Verbrennungsphase.

10. Verfahren nach einem der Ansprüche 1 bis 9, dadurch gekennzeichnet, daß die Additionskorretur (KA) gleich der Glättung erster Ordnung der Differenz zwischen den für das berechnete Gasmoment (Cgc) und für das vorgesehene theoretische Moment (Cpr) bei stabilisierter Drehzahl, unabhängig von den Zylindern, repräsentativen Signale ist.

11. Verfahren nach einem der Ansprüche 1 bis 10, dadurch gekennzeichnet, daß es umfaßt den Schritt bestehend aus einem Bestimmen (21) des stabilisierten oder einschwingenden Betriebs des Motors in Abhängigkeit von der Differenz, vorzugsweise in absolutem Wert, zwischen zwei, einerseits für die betreffende Entspannung-Verbrennungsphase und andererseits für die vorletzte Entspannung-Verbrennungsphase berechneten Werte des Bezugsmoments (Cref) und ein Annehmen, daß ein Einschwingbetrieb vorliegt, wenn diese Differenz größer als ein bestimmter Schwellenwert (S1) ist, und eine stabilisierter Betrieb vorliegt, wenn diese Differenz nach einer bestimmten Anzahl von aufeinanderfolgenden Motorzyklen kleiner als der Schwellenwert (S1) ist.

12. Verfahren nach einem der Ansprüche 9 und 10, dadurch gekennzeichnet, daß es umfaßt den Schritt bestehend aus einem Speichern in einem Speicher (19, 23, 24) einer bestimmten Anzahl von letzten aufeinanderfolgender Werte des Verhältnisses des Gasmoments (Cg) zu dem Bezugsmoment (Cref) und des letzten für die Berechnung der Korrekturen (KM, KA) notwendigen Wertes der Additionskorrektur (KA) und einem Speichern des dem vorgesehenen Moment (Cpr) entsprechenden, berechneten Wertes anstelle eines Gasmomentwertes (Cg), wenn, für diesen Werte (Cg) ein Verbrennungsaussetzer erfaßt (22) wird.

**13.** Verfahren nach einem der Ansprüche 1 bis 12 für einen mit Katalysator ausgestatteten Motor, dadurch gekennzeichnet, daß es umfaßt den Schritt bestehend ferner aus:

einem Messen (32, 33) der Anzahl oder der Beträge der während der jeweiligen Fenster N1 und N2-Motorumdrehungen, z. B. 200 und 1000 Umdrehungen, erfaßten Verbrennungsaussetzer,
ein Vergleichen (34, 35) jede dieser Messungen mit wenigstens einem für jedes Fenster geeigneten Schwellenwert (S6, S7), und
Geben eines Alarmsignals (36) entsprechend einem kritischen Zustand des Katalysators im Falle einer Abweichung von dem für das Fenster (32) von N1-Umdrehungen geeigneten Schwellenwertes (S6) und/oder eines Alarmsignals (37) entsprechend einer Abweichung von einem Schwellenwert für die Schadstoffemission in den Abgasen im Falle einer Abweichung von dem für das Fenster (33) von N2-Umdrehungen geeigneten Schwellenwert (S7).

**14.** Verfahren nach einem der Ansprüche 1 bis 13, dadurch gekennzeichnet, daß es umfaßt den Schritt bestehend aus einem Deaktivieren der Erfassung der Aussetzer in der Unterbrechungsphase der Einspritzung und/oder in der Motorantriebsphase, wobei letztere Phase erfaßt wird, wenn der Druck des Ansaugrohres (Pca) unter einen Schwellenwert für den von der Drehzahl (N) des Motors abhängigen Druck fällt und/oder wenn das vorgesehene Moment (Cpr) niedriger als ein begrenztes Moment ist, das z. B. dem Gasmoment entspricht, das bei einem Nutzmoment Null für eine identische Drehzahl (N) des Motors berechnet wird.

**15.** Verfahren nach Anspruch 14, dadurch gekennzeichnet, daß es umfaßt den Schritt bestehend aus einem Eingeben des Drehzahlsignals (N) als Adresse in eine Tabelle (15) an einer Eintragstelle, die die Werte des begrenzten Moment für verschiedene Drehzahlwerte (N) des Motors wiedergibt, und einem Ableiten durch Interpretation, vorzugsweise linear, eines Signals, das den begrenzten Moment (Clim) repräsentativ ist, welches mit dem vorgesehenen theoretischen Moment (Cpr) verglichen wird, um abzuleiten, daß der Motor antreibt oder angetrieben wird je nach dem ob (Cpr) größer oder kleiner als (Clim) ist.

**16.** Verfahren nach Anspruch 15, dadurch gekennzeichnet, daß es umfaßt den Schritt bestehend aus einem Deaktivieren (22, 24) der Erfassung der Aussetzer, wenn das vorgesehene Moment (Cpr) niedriger als das Produkt des begrenzten Moments (Clim) mit einem Faktor (S7) von kleiner oder gleich 1 ist.

**17.** Verfahren nach einem der Ansprüche 1 bis 16, dadurch gekennzeichnet, daß es umfaßt den Schritt bestehend aus einem Deaktivieren (28, 26) der Erfassung der Aussetzer, wenn der absolute Wert der Differenz zwischen den Bezugsmomenten (Cref) für die Verbrennungsphasen unter Entspannung der Ordnung n und n -2 größer als ein Schwellenwert (S5) ist.

**18.** Verfahren nach einem der Ansprüche 1 bis 17, dadurch gekennzeichnet, daß es umfaßt den Schritt bestehend aus einem Deaktivieren (27, 26) der Erfassung von Aussetzern im Falle einer zu hohen Abweichung der dem berechneten Gasmoment (Cgc) und dem vorgesehenen theoretischen Moment (Cpr) repräsentativen Signale zueinander.

**19.** Verfahren nach Anspruch 18, dadurch gekennzeichnet, daß es daraus besteht, anzunehmen, daß eine zu große Abweichung vorliegt, wenn der Mittelwert des Verhältnisses ($\frac{Cgc - Cpr}{Cgc}$), das für eine gegebene Anzahl von letzten Verbrennungsphasen unter Entspannung berechnet wird, einen Schwellenwert der Kalibrierung (S4) übersteigt, und die Erfassung von Aussetzern zu reaktivieren, sobald der Mittelwert wieder unter den Schwellenwert der Kalibrierung (S4) fällt.

**20.** Verfahren nach einem der Ansprüche 8 bis 19, soweit sich diese auf den Anspruch 6 zurückbeziehen, dadurch gekennzeichnet, daß es umfaßt den Schritt bestehend aus einem Deaktivieren der Erfassung der Aussetzer auch langzeitig, wenn es keine Definition von wenigstens einem Kompensationsglied der Momentvariationen bei Einspritzunterbrechung gibt.

**21.** Verfahren nach einem der Ansprüche 8 bis 20, dadurch gekennzeichnet, daß es darin besteht, das Signal (Pca) durch jedes andere Signal zu ersetzen, das der spezifischen Befüllung der Zylinder des Motors repräsentativ ist, wie durch ein Signal des Luftdurchlasses oder Öffnungswinkels einer Drosselklappe oder einer Klappe zur Drosselung oder Regulierung der Luftversorgung.

**22.** Vorrichtung zur Erfassung von Verbrennungsaussetzern einer Brennkrafimaschine mit Funkenzündung zur Durchführung des Verfahrens gemäß einem der vorstehenden Ansprüche 1 bis 21, dadurch gekennzeichnet, daß sie umfaßt:

wenigstens einen Meßfühler (1) für die Drehzahl des Motors, der ein Signal der Drehzahl (N) liefert,

wenigstens einen Meßfühler (10) für einen Parameter, welcher der spezifischen Befüllung der Zylinder des Motors repräsentativ ist, wie ein Druckmeßfühler des Luftansaugrohres, eine Durchsatzmeßeinrichtung für Ansaugluft oder eine Meßeinrichtung für den Winkel der Drosselklappe, die ein diesem Parameter repräsentatives Signal liefert,

eine Berechnungseinrichtung (6) für das Gasmoment (Cg) ausgehend von dem Signal der Motordrehzahl (N), eine Speichereinrichtung (15, 22, 23, 24), um Kartierungen und Schwellenwerte zu speichern, Berechnungseinrichtungen (16, 17, 18, 19) und Vergleichseinrichtungen (21, 22), die gestatten, Werte des Bezugsmomentes (Cref), des vorgesehenen Moments (Cpr), des berechneten Gasmoments (Cgc), der Multiplikations- und Additionskorrekturen (KM, KA), des Verhältnises Cpr/Cgc zu berechnen und/oder zu speichern und diese mit den Schwellenwerten (S1, S2, S3, S4, S5) zu vergleichen, um das Vorhandensein von Verbrennungsaussetzern (22, 29) zu bestimmen.

FIG.1.

(Cpr LENT)　　　(Cg)

19 — $k_A$

$(k_A)$

(24) (23)

18 — Cpr RAPIDE = Cpr LENT + $k_A$

FIG.2.

(15)

21 — $|Cref\ n - Cref\ n-2| \gtrless S_1$

20 — Cpr = Cpr LENT  OU  Cpr = Cpr RAPIDE

(Cpr)

22 — $\dfrac{Cpr}{Cg} > S_2$

OUI

NON

(19) (16)

(19) (16)

24 —
* $\dfrac{Cpr}{Cref}$
* Cpr − Cpr LENT
* 0

(27)

23 —
* $\dfrac{Cg}{Cref}$
* Cg − Cpr LENT
* (Cg − Cpr)/Cg

(27)

(25)

EP 0 774 110 B1

# FIG.3.

(23,24)

25

$C_{pr} > S_3 \times C_{lim}$ → NON

↓ oui

27

(23,24) → $D < S_4$ → NON

↓ oui

28

(15) → $|C_{refn} - C_{refn-2}| < S_5$ → NON

↓ oui

29

26

(30)

# FIG.4.